# EUROPÄISCHE PATENTSCHRIFT

(11) **EP 1 445 082 B1**
(45) Veröffentlichungstag und Bekanntmachung des Hinweises auf die Patenterteilung: **12.10.2011**
(21) Anmeldenummer: 04002099.2
(22) Anmeldetag: 31.01.2004
(51) Int. Cl.: B27D 5/00

(54) **Kantenanleimvorrichtung**
Edge-banding machine
Encolleuse de chants

(30) Priorität: 07.02.2003 DE 10305022
(43) Veröffentlichungstag der Anmeldung: 11.08.2004
(73) Patentinhaber: Schulte-Göbel, Christof, 57392 Schmallenberg (DE)
(72) Erfinder: Schulte-Göbel, Christof, 57392 Schmallenberg (DE)
(74) Vertreter: Schneider, Uwe

(56) Entgegenhaltungen:
- EP-A- 0 728 561
- DE-U1- 20 204 285
- GB-A- 2 081 642

## Beschreibung

Die vorliegende Erfindung betrifft eine Kantenanleimvorrichtung zum Aufbringen eines Umleimers auf eine Kante eines Werkstücks, gemäß dem Oberbegriff des Anspruchs 1. Eine solche Kantenanleim =vorrichtung ist aus EP 0728 561 A bekannt. Vorrichtungen zum Aufbringen eines Umleimers auf eine Kante eines Werkstücks, insbesondere eines Holzwerkstücks, sind in unterschiedlichen Ausführungsformen bekannt. Diese sogenannten Kantenanleimvorrichtungen werden bei der Holzbearbeitung eingesetzt, um Furnierstreifen (Umleimer) auf eine Kante eines Werkstücks aufzubringen. Häufig kommen zu diesem Zweck maschinell angetriebene Spezialmaschinen mit eigenem Untergestell und eigenem Anschlag zum Einsatz, die ausschließlich dazu geeignet sind, Umleimer auf Werkstückkanten aufzubringen. Diese Spezialmaschinen sind relativ teuer, liefern jedoch hinsichtlich der Passgenauigkeit des Umleimers auf der Werkstückkante gute Ergebnisse.

Steht keine spezielle Kantenanleimvorrichtung zur Verfügung, wird der Umleimer häufig mit Hilfe eines Bügeleisens oder dergleichen auf eine Kante eines Werkstücks aufgebracht. Dabei kommt in der Regel Umleimer zum Einsatz, der einseitig mit einem aktivierbaren Schmelzkleber versehen ist. Der Umleimer wird entsprechend der Kantenlänge des zu bearbeitenden Werkstücks passgenau geschnitten, auf die Werkstückkante aufgesetzt, durch Aktivierung des Schmelzklebers mittels des Bügeleisens auf der Kante fixiert und gegebenenfalls manuell nachbearbeitet. Diese Methode liefert allerdings hinsichtlich der Passgenauigkeit der Kante häufig nur unzureichende Ergebnisse.

Aus der EP 0 728 561 A1 ist eine Kantenanleimvorrichtung zur lösbaren Anbringung an einer Spindel einer Werkzeugmaschine bekannt, die aber keine kontinuierliche Zufuhr des Umleimers aufweist.

Hier setzt die vorliegende Erfindung an.

Aufgabe der Erfindung ist es, eine preiswerte und flexibel einsetzbare Kantenanleimvorrichtung zur Verfügung zu stellen, die einfach zu bedienen ist und darüber hinaus eine hohe Passgenauigkeit des Umleimers an der Kante des Werkstücks gewährleistet.

Diese Aufgabe wird durch eine Kantenanleimvorrichtung der eingangs genannten Art gelöst, bei der die Kantenanleimvorrichtung mindestens eine erste Vorschubrolle aufweist, die während des Vorschubs des Werkstücks in Vorschubrichtung mit der Kante in Wirkverbindung steht, und eine zweite Vorschubrolle aufweist, die mit der ersten Vorschubrolle und der Umleimerzufuhreinrichtung in Wirkverbindung steht, wobei der Vorschub des Werkstücks die Zufuhr des Umleimers in der Umleimerzufuhreinrichtung bewirkt. Hierzu wird vorgeschlagen, dass die Kantenanleimvorrichtung auf das Grundgestell einer bei der Holzbearbeitung vorhandenen Werkzeugmaschine, die eine Spindel aufweist, lösbar angebracht werden kann. Bei der Werkzeugmaschine kann es sich beispielsweise um eine Fräsmaschine oder eine Drehmaschine handeln, die neben der bereits erwähnten Spindel, ein Grundgestell sowie einen Anschlag aufweisen, an dem das zu bearbeitende Werkstück angelegt und sicher geführt werden kann. Der Begriff "Spindel" wurde hier aus Gründen der sprachlichen Vereinfachung gewählt. Es sei an dieser Stelle betont, dass es bei der vorliegenden Erfindung nicht auf eine Drehbarkeit der Spindel ankommt. Die Spindel dient lediglich dem Zweck, den Träger der Kantenanleimvorrichtung lösbar an ihr anzubringen. Anstelle der Spindel kann daher auch ein anderes funktionsgleiches Element (zum Beispiel ein auf einem Gestell angeordnetes zylinder- oder quaderartiges Element) eingesetzt werden, an dem der Träger der Kantenanleimvorrichtung lösbar angebracht werden kann. Die erfindungsgemäße Lösung hat den Vorteil, dass keine teure Spezialmaschine mit eigenem Grundgestell und eigenem Anschlag angeschafft werden muss, die lediglich zum Aufbringen eines Umleimers auf eine Werkstückkante geeignet ist. Stattdessen werden das Gestell, die Spindel, der Anschlag sowie eventuell der Vorschub einer bereits vorhandenen Werkzeugmaschine verwendet, wobei der Träger der erfindungsgemäßen Kantenanleimvorrichtung lösbar an der Werkzeugspindel angebracht wird und somit relativ schnell wieder von der Spindel entfernt werden kann. Mit der erfindungsgemäßen Kantenanleimvorrichtung lassen sich ferner hinsichtlich der Passgenauigkeit des Umleimers auf der Werkstückkante erheblich bessere Ergebnisse erzielen als bei Verwendung eines Bügeleisens oder dergleichen. Die Verbesserung der Zufuhr des Umleimers erfolgt mit Hilfe von zwei gekoppelten Vorschubrollen, über die eine Bewegung des Werkstücks in Vorschubrichtung in eine Transportbewegung des Umleimers innerhalb der Umleimerzufuhreinrichtung umgesetzt wird.

In einer bevorzugten Ausführungsform ist vorgesehen, dass die Mittel zur lösbaren Anbringung der Kantenanleimvorrichtung eine im Träger angeordnete Aufnahme umfassen, die formschlüssig auf die Spindel aufsetzbar ist. Diese Ausführungsform gestattet insbesondere eine einfache und schnelle Anbringung der Kantenanleimvorrichtung an der Spindel der Werkzeugmaschine. Soll die Kantenanleimvorrichtung beispielsweise auf die Spindel einer Fräsmaschine aufgesetzt werden, wird zunächst der Fräskopf der Fräsmaschine demontiert und damit die Spindel freigesetzt. Im Anschluss daran wird die Aufnahme des Trägers auf die Spindel aufgesetzt.

Da die Spindel herkömmlicher Werkzeugmaschinen in der Regel im Wesentlichen zylinderförmig ausgebildet sind, sieht eine besonders bevorzugte Ausführungsform der vorliegenden Erfindung vor, dass die Aufnahme im Wesentlichen kreisförmig ausgebildet ist. Dadurch wird erreicht, dass die Aufnahme einfach, schnell und bequem auf die Spindel der Werkzeugmaschine aufsetzbar ist.

Eine Weiterbildung sieht vor, dass die Aufnahme einen Adapter umfasst, der an die Form und den Durchmesser der Spindel angepasst ist. Damit ist die Kantenanleimvorrichtung vielseitig einsetzbar, da für unterschiedliche Typen von Werkzeugmaschinen mit unterschiedlich ausgeführten Spindeln lediglich der Adapter ausgetauscht werden muss, um den Träger der Kantenanleimvorrichtung lösbar an der Spindel der Werkzeugmaschine anbringen zu können.

In einer besonders bevorzugten Ausführungsform umfasst die Kantenanleimvorrichtung mindestens eine Verriegelungseinrichtung, um den Träger verschiebe- und/oder verdrehsicher an der Spindel und/oder am Anschlag der Werkzeugmaschine anzubringen. Diese Verriegelungseinrichtung sorgt dafür, dass die Kantenanleimvorrichtung während ihres Betriebs sicher an der Spindel angebracht ist, wodurch die Handhabung der Kantenanleimvorrichtung erleichtert wird und hinsichtlich der Passgenauigkeit des Umleimers bessere Ergebnisse erzielt werden.

Eine Weiterbildung der vorliegenden Erfindung sieht vor, dass der Träger im Wesentlichen plattenförmig ausgebildet ist. Diese Ausführungsform erleichtert vor allem den Zusammenbau der erfindungsgemäßen Kantenanleimvorrichtung, da die laterale Ebene, die durch den plattenförmigen Träger festgelegt wird, im Wesentlichen senkrecht zu der Kante des Werkstücks verläuft, auf die der Umleimer aufgebracht werden soll.

Als Umleimer wird häufig einseitig mit einem Schmelzkleber versehenes Melaminpapier eingesetzt. Eine besonders vorteilhafte Ausführungsform sieht daher vor, dass die Kantenanleimvorrichtung ein Heißluftgebläse umfasst, das geeignet ist, eine auf dem Umleimer angebrachte adhäsive Schicht zu aktivieren. Das Heißluftgebläse ist dabei vorzugsweise so angeordnet, dass die ausströmende Heißluft direkt auf die mit dem Schmelzkleber versehene Seite des Umleimers trifft.

Alternativ kann auch eine Beleimungseinrichtung zum Aufbringen einer adhäsiven Schicht auf die Kante des Werkstücks und/oder den Umleimer vorgesehen sein. Diese Ausführungsform ist dann vorteilhaft, wenn ein Umleimer eingesetzt werden soll, der selbst nicht mit einer aktivierbaren Klebeschicht versehen ist.

Um die Einsatzmöglichkeiten zu erweitern, ist die Kantenanleimvorrichtung vorzugsweise so ausgebildet, dass das Heißluftgebläse durch die Beleimungseinrichtung ersetzt werden kann.

Vorzugsweise kann eine Werkstückauflage verwendet werden, die unter verschiedenen Winkeln zur Kantenanleimvorrichtung positionierbar ist.

Eine vorteilhafte Ausführungsform sieht vor, dass die Anpresseinrichtung, die den Umleimer an die Kante des Werkstücks andrückt, als Andruckrolle ausgebildet ist. Wird das Werkstück in Vorschubrichtung an der Kantenanleimvorrichtung entlanggeführt, wird die Kante des Werkstücks an die Andruckrolle gedrückt, wobei sich während des Vorschubs stets ein Abschnitt des Umleimers zwischen der Werkstückkante und der Andruckrolle befindet. Es wirkt dabei immer eine Kraftkomponente senkrecht zur Vorschubrichtung in Richtung der Andruckrolle. Dadurch wird wiederum eine Gegenkraft von der Andruckrolle auf den Umleimer und die Kante des Werkstücks ausgeübt, wodurch die adhäsive Verbindung zwischen dem Umleimer und der Kante des Werkstücks hergestellt wird.

In einer besonders bevorzugten Ausführungsform ist dabei die Andruckrolle drehbar auf dem Träger der Kantenanleimvorrichtung gelagert. Diese Ausführungsform sorgt dafür, dass der mittels der Umleimerzufuhreinrichtung der Kante des Werkstücks zugeführte Umleimer parallel zu dieser Kante ausgerichtet wird, so dass die passgenaue Aufbringung des Umleimers auf die Kante des Werkstücks verbessert wird.

Damit der Umleimer der Kante des Werkstücks zuverlässig zugeführt werden kann, sieht eine besonders vorteilhafte Ausführungsform vor, dass die Umleimerzufuhreinrichtung mindestens eine Führungsschiene umfasst, in die der Umleimer aufgenommen wird und während des Vorschubs des Werkstücks in Vorschubrichtung durch Zug der Kante des Werkstücks zugeführt wird. Diese Führungsschiene besteht vorzugsweise aus Metall, was sich hinsichtlich der Langlebigkeit der Umleimerzufuhreinrichtung als vorteilhaft erwiesen hat.

In einer besonders bevorzugten Ausführungsform ist die mindestens eine Führungsschiene der Umleimerzufuhreinrichtung an die Breite des Umleimers anpassbar. Dadurch wird erreicht, dass die Kantenanleimvorrichtung sehr flexibel eingesetzt werden kann. Abhängig von der Breite der Kante des Werkstücks kann die Umleimerzufuhreinrichtung der Kantenanleimvorrichtung an den zu verwendenden Umleimer angepasst werden.

In einer besonders vorteilhaften Ausführungsform ist vorgesehen, dass die mindestens eine Führungsschiene der Umleimerzufuhreinrichtung eine Mehrzahl von Führungsrollen aufweist. Diese Weiterbildung der Kantenanleimvorrichtung erleichtert die kontinuierliche Zufuhr des Umleimers auf die Kante des Werkstücks, da der Umleimer durch das Vorhandensein der Führungsrollen in der Führungsschiene der Umleimerzufuhreinrichtung erheblich einfacher bewegt werden kann.

Eine Weiterbildung sieht vor, dass der Umleimer eine Schneideinrichtung aufweist, mit deren Hilfe der Umleimer entlang seiner Breite, d.h. quer zur Zufuhrrichtung, durchtrennt werden kann, um die Kante des Werkstücks mit dem Umleimer im Wesentlichen bündig abzuschließen.

Vorzugsweise ist diese Schneideinrichtung manuell betätigbar. Dazu kann ein Bedienhebel vorgesehen sein, der eine bedarfsgerechte Betätigung der Schneideinrichtung und damit die Durchtrennung des Umleimers entlang seiner Breite ermöglicht.

In einer Weiterbildung der vorliegenden Erfindung ist vorgesehen, dass die Kantenanleimvorrichtung ein Oberteil aufweist, das lösbar am Träger befestigbar ist. Dieses Oberteil dient zur Abdeckung sämtlicher Elemente der Kantenanleimvorrichtung und ist insbesondere aus Wartungsgründen lösbar am Träger befestigt.

Um eine Anpassung der Kantenanleimvorrichtung an unterschiedlich breite Umleimer zu ermöglichen, sieht eine Weiterbildung vor, dass der vertikale Abstand zwischen dem Oberteil und dem Träger der Kantenanleimvorrichtung veränderbar ist.

In den bisher beschriebenen Ausführungsformen wurde der Umleimer innerhalb der Umleimerzufuhreinrichtung ausschließlich durch eine während des Vorschubs des Werkstücks wirkende Zugkraft transportiert. Diese Zugkraft kann unter Umständen zu einem Reißen des Umleimers innerhalb der umleimerzufuhreinrichtung führen. Um die kontinuierliche Zufuhr des Umleimers zu verbessern, sieht eine besonders bevorzugte Ausführungsform daher vor, dass die Kantenanleimvorrichtung mindestens eine erste Vorschubrolle, die während des Vorschubs des Werkstücks in Vorschubrichtung mit der Kante in Wirkverbindung steht, und eine zweite Vorschubrolle, die mit der ersten Vorschubrolle und der Umleimerzufuhreinrichtung in Wirkverbindung steht, aufweist, wobei der Vorschub des Werkstücks die Zufuhr des Umleimers in der Umleimerzufuhreinrichtung bewirkt. Somit wird mittels dieser Anordnung eine Bewegung des Werkstücks in Vorschubrichtung in eine Transportbewegung des Umleimers innerhalb der Umleimerzufuhreinrichtung umgesetzt. Diese Ausführungsform ist insbesondere dann vorteilhaft, wenn die Bewegung des Werkstücks in Vorschubrichtung manuell und nicht mittels einer zusätzlichen Fördereinrichtung erfolgt.

Da die Wirkverbindungen durch Reibschluss hergestellt werden, ist es vorteilhaft, die Vorschubrollen als Vollgummirollen auszuführen oder zumindest Rollen mit einer äußeren Gummibeschichtung vorzusehen. Alternativ können auch gerändelte Rollen (zum Beispiel eine gerändelte zweite Vorschubrolle aus Metall) eingesetzt werden.

In einer besonders bevorzugten Ausführungsform wird vorgeschlagen, dass die Durchmesser der ersten Vorschubrolle und der zweiten Vorschubrolle so gewählt sind, dass die Zufuhr des Umleimers synchron mit der Bewegung des Werkstücks in Vorschubrichtung erfolgt. Diese Ausführungsform vereinfacht den Betrieb der Kantenanleimvorrichtung erheblich, da der Umleimer stets synchron mit der Vorschubbewegung des Werkstücks zugeführt wird.

Um den Transport des Umleimers und damit die Qualität der Kantenanleimung zu verbessern sieht eine vorteilhafte Ausführungsform vor, dass eine Führungsrolle drehbar in der Weise auf dem Träger angeordnet ist, dass sie der zweiten Vorschubrolle gegenüberliegt, und dass sich ein Abschnitt der Umleimerzufuhreinrichtung zwischen der zweiten Vorschubrolle und der Führungsrolle erstreckt.

Vorzugsweise ist auch diese Führungsrolle aus Vollgummi gefertigt oder zumindest mit einer äußeren Gummischicht versehen, um die auf Reibschluss basierende Wirkverbindung mit der Umleimerzufuhreinrichtung zu optimieren.

Insgesamt wird mit der vorliegenden Erfindung eine Kantenanleimvorrichtung zur Verfügung gestellt, die flexibel auf die Spindel einer Werkzeugmaschine aufsetzbar ist, wobei keine zusätzlichen Antriebsmittel benötigt werden, um den Umleimer der Kante des Werkstücks kontinuierlich zuzuführen. Ein weiterer Vorteil der vorliegenden Erfindung besteht darin, dass das Grundgestell und der Anschlag der Werkzeugmaschine benutzt werden können, um das Werkstück an der Kantenanleimvorrichtung entlang zu führen.

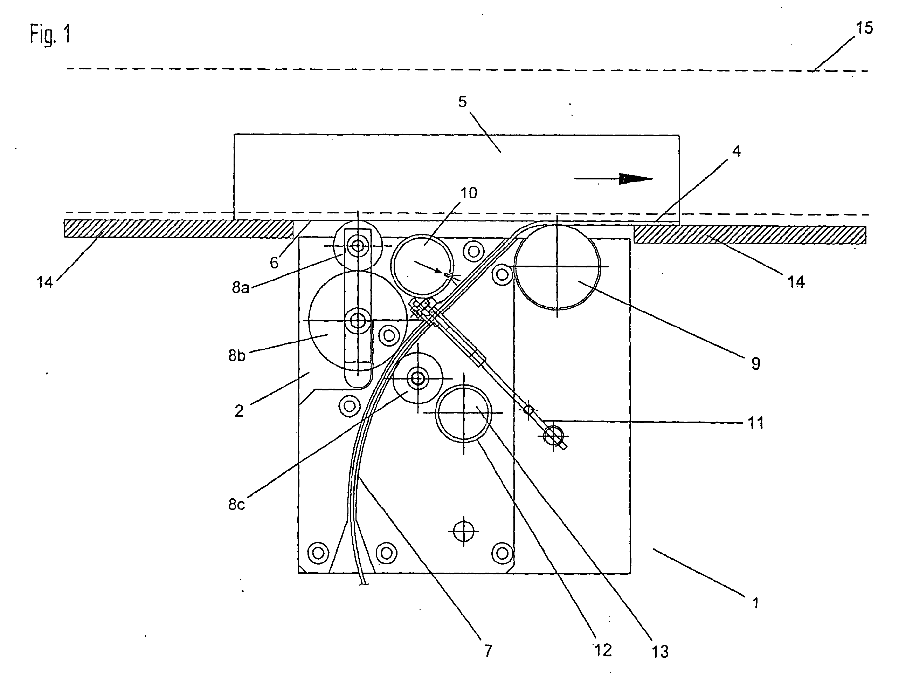

Weitere Merkmale und Vorteile der vorliegenden Erfindung werden deutlich anhand der nachfolgenden Beschreibung eines bevorzugten Ausführungsbeispiels unter Bezugnahme auf die beiliegende Abbildung. Darin zeigt
- Fig. 1: - eine schematisierte Draufsicht auf eine erfindungsgemäße Kantenanleimvorrichtung.

In Fig. 1 ist eine schematisierte Draufsicht auf eine Kantenanleimvorrichtung 1 zum Aufbringen eines Umleimers 4 auf eine Kante 6 eines Werkstücks 5 gemäß einer bevorzugten Ausführungsform der vorliegenden Erfindung gezeigt.

Die erfindungsgemäße Kantenanleimvorrichtung 1 weist einen Träger 2 auf, der in diesem Ausführungsbeispiel im Wesentlichen plattenförmig ausgebildet ist. Auf dem Träger 2 sind eine Umleimerzufuhreinrichtung 7 zur kontinuierlichen Zufuhr des Umleimers 4, eine erste Vorschubrolle 8a, eine zweite Vorschubrolle 8b, eine Führungsrolle 8c, eine Andruckrolle 9, ein Heißluftgebläse 10 sowie eine Schneideinrichtung 11 angeordnet. Die erste Vorschubrolle 8a, die zweite Vorschubrolle 8b, die Führungsrolle 8c und die Andruckrolle 9 sind jeweils drehbar gelagert.

Darüber hinaus umfasst die erfindungsgemäße Kantenanleimvorrichtung 1 ein in dieser Ansicht nicht explizit dargestelltes Oberteil 3, das auf den Träger 2 aufsetzbar ist und lösbar an diesem befestigt werden kann. In der vorliegenden Ausführungsform ist dieses Oberteil 3 bezogen auf den Träger 2 höhenverstellbar ausgeführt. Dadurch ist abhängig von der Breite der Kante 6 des Werkstücks 5 und damit verbunden auch von der Breite des Umleimers 4 eine Anpassung der Umleimerzufuhreinrichtung 7 an die jeweilige Breite des Umleimers 4 möglich.

Die Umleimerzufuhreinrichtung 7 umfasst eine hier nicht im Detail dargestellte Führungsschiene, entlang welcher der Umleimer 4 in Zufuhrrichtung geführt wird.

Als Umleimer 4 wird beispielsweise farbiges und gegebenenfalls gemasertes Melaminpapier eingesetzt, das auf einer Seite eine aktivierbare, vorzugsweise mit einem herkömmlichen Schmelzkleber versehene Klebeschicht aufweist. Es können auch ABS-Kanten, Echtholzkanten oder dergleichen verwendet werden.

In einem etwa mittleren Bereich umfasst der Träger 2 der Kantenanleimvorrichtung 1 eine im Wesentlichen kreisförmig ausgebildete Aufnahme 12, die dazu geeignet ist, die erfindungsgemäße Kantenanleimvorrichtung beispielsweise auf eine etwa zylinderförmige Spindel 13 einer Werkzeugmaschine oder dergleichen aufzusetzen.

Soll die Kantenanleimvorrichtung 1 beispielsweise an der Spindel 13 einer Fräsvorrichtung angebracht werden, wird zunächst der Fräskopf der Fräsvorrichtung entfernt, so dass die Spindel 13 zugänglich wird. Dann wird die Kantenanleimvorrichtung 1 mit ihrer Aufnahme 12 auf die Spindel 13 aufgesetzt.

Gegebenenfalls können zusätzliche, hier nicht explizit dargestellte Arretiermittel vorgesehen sein, um die Kantenanleimvorrichtung 1 mit der Aufnahme 12 lösbar aber verschiebe- und/oder verdrehsicher an der Spindel 13 und dem Anschlag 14 anzubringen.

Die Position und die Form der Aufnahme 12 ist abhängig von der Form und/oder der Lage der Spindel 13. Gegebenenfalls kann die Aufnahme 12 in Längs- und/oder Querrichtung verschiebbar auf dem Träger 2 angeordnet sein und darüber hinaus können Adapter für verschiedene Durchmesser und Formen der Spindel 13 vorgesehen sein, um eine möglichst flexible Verwendung der erfindungsgemäßen Kantenanleimvorrichtung 1 zu ermöglichen.

Die lösbare Anbringung der Kantenanleimvorrichtung 1 an einer Spindel 13 einer Fräsvorrichtung oder dergleichen hat den Vorteil, dass die Kantenanleimvorrichtung 1 einfach, schnell und bequem auf die Spindel 13 einer Fräsvorrichtung aufgesetzt und von dieser wieder entfernt und gegen den Fräskopf ausgetauscht werden kann. So kann in der Praxis relativ rasch zwischen den Arbeitsschritten Fräsen und Aufbringen des Umleimers gewechselt werden.

Gegenüber den bisher bekannt gewordenen Kantenanteimvorrichtungen hat die erfindungsgemäße Lösung ferner den Vorteil, dass beispielsweise ein gewöhnlich bei einer Fräsvorrichtung vorhandenes Trägergestell sowie ein Anschlag und ein Vorschub zum Führen eines Werkstück verwendet werden können, um das zu bearbeitende Werkstück 5 sicher in der in Fig.1 durch einen Pfeil angedeuteten Vorschubrichtung mit der Kante 6 an der Kantenanleimvorrichtung 1 entlang zu führen. Somit muss keine separate Spezialmaschine mit eigenem Gestell, Anschlag und Vorschub zum Aufbringen des Umleimers 4 auf ein Werkstück 5 angeschafft werden.

Die Umleimerzufuhreinrichtung 7 ist so ausgebildet, dass sie den Umleimer 4 der Kante 6 unter einem spitzen Winkel relativ zur Vorschubrichtung des Werkstücks 5 zuführt. Die Umleimerzufuhreinrichtung 7 kann neben der oben bereits erwähnten Führungsschiene zusätzlich eine Mehrzahl von drehbar gelagerten Rollen aufweisen, die hier nicht explizit dargestellt sind. Diese Rollen erleichtern die kontinuierliche Zufuhr des Umleimers 4 im Vergleich zu einer Umleimerzufuhreinrichtung 7, die keinerlei zusätzliche Rollen aufweist.

An der dem Werkstück 5 während des Betriebs der Kantenanleimvorrichtung 1 zugewandten Seite ist in Vorschubrichtung betrachtet zunächst eine erste Vorschubrolle 8a vorgesehen, die mit der Kante 6 des Werkstücks 5 und einer zweiten Vorschubrolle 8b in Wirkverbindung steht. Die Wirkverbindung wird dabei vorzugsweise durch Reibschluss hergestellt. Der Durchmesser der ersten Vorschubrolle 8a ist hier kleiner gewählt als derjenige der zweiten Vorschubrolle 8b. Die zweite Vorschubrolle 8b steht ihrerseits mit dem Umleimer 4 innerhalb der Umleimerzufuhreinrichtung 7 in Wirkverbindung.

Wird nun während des Betriebs der Kantenanleimvorrichtung 1 das Werkstück 5 mit der Kante 6 in Vorschubrichtung bewegt, erfährt die erste Vorschubrolle 8a aufgrund der Wirkverbindung zwischen ihr und der Kante 6 eine bezogen auf die Darstellung in Fig. 1 im Uhrzeigersinn verlaufende Rotation. Aufgrund der Wirkverbindung mit der zweiten Vorschubrolle 8b rotiert letztere ihrerseits gegen den Uhrzeigersinn und sorgt über eine Wirkverbindung mit dem Umleimer 4 in der Umleimerzufuhreinrichtung 7 für dessen kontinuierliche Zufuhr in Transportrichtung. Entsprechend sind die Durchmesser der ersten Vorschubrolle 8a und der zweiten Vorschubrolle 8b so gewählt, dass das Verhältnis der Durchmesser eine kontinuierliche und mit dem Vorschub des Werkstücks 5 im Wesentlichen synchrone Zufuhr des Umleimers 4 ermöglicht.

Ferner ist eine zusätzliche Führungsrolle 8c vorgesehen, die der zweiten Vorschubrolle 8b in der Weise gegenüberliegend angeordnet ist, dass die Umleimerzufuhreinrichtung 7 abschnittsweise zwischen der zweiten Vorschubrolle 8b und der Führungsrolle 8c verläuft. Die Führungsrolle 8c sorgt für eine sichere Führung des Umleimers 4 in der Umleimerzufuhreinrichtung 7.

Die Bewegung des Werkstücks 5 in Vorschubrichtung wird somit über die soeben beschriebene Rollenanordnung in eine Transportbewegung des Umleimers 4 in der Umleimerzufuhreinrichtung 7 umgesetzt.

In Vorschubrichtung hinter der ersten Vorschubrolle 8a ist ein Heißluftgebläse 10 in der Weise angeordnet, dass die aus dem Heißluftgebläse 10 strömende Heißluft im Wesentlichen auf die mit der Klebeschicht versehene Seite des Umleimers 4 gerichtet ist. Bei dieser Klebeschicht handelt es sich üblicherweise um Schmelzkleber, der durch Wärmezufuhr bei einer bestimmten Temperatur aktiviert wird, so dass der Umleimer 4 an der Kante 6 des Werkstücks 5 haften kann.

Anstelle des Heißluftgebläses 10 kann auch eine Beleimungseinrichtung vorgesehen sein, die entweder einen nicht mit einem Schmelzkleber versehenen Umleimer 4 oder die Kante 6 des Werkstücks 5 mit einer adhäsiven Schicht versieht. Aus diesem Grund ist es vorteilhaft, die Kantenanleimvorrichtung 1 so auszuführen, dass das Heißluftgebläse 10 einfach und schnell gegen eine Beleimungseinrichtung ausgetauscht werden kann.

Aus Fig. 1 wird deutlich, dass die Umleimerzufuhreinrichtung 7 in einem spitzen Winkel relativ zur Vorschubrichtung des Werkstücks 5 angeordnet ist. Ferner ist in Vorschubrichtung betrachtet hinter dem Heißluftgebläse 10 eine Andruckrolle 9 vorgesehen, die so ausgebildet ist, dass der Umleimer 4 in Vorschubrichtung in der Weise umgebogen wird, dass er im Wesentlichen parallel zur Kante 6 des Werkstücks 5 passgenau ausgerichtet wird. Während des manuellen oder maschinellen Vorschubs des Werkstücks 5 wirkt stets eine Kraftkomponente senkrecht zur Vorschubrichtung in Richtung der Kantenanleimvorrichtung 1. Dadurch wird zwischen der Kante 6 des Werkstücks 5, dem Umleimer 4 und der Andruckrolle 9 ein Anpressdruck erzeugt, um eine Adhäsionsverbindung zwischen der Kante 6 und dem Umleimer 4 herzustellen.

Um den Aufbau der Kantenanleimvorrichtung 1 zu vereinfachen, kann bei entsprechender Ausgestaltung der Umleimerzufuhreinrichtung 7 auf die erste Vorschubrolle 8a, die zweite Vorschubrolle 8b und die Führungsrolle 8c verzichtet werden. Der während des Vorschubs zwischen der Kante 6 des Werkstücks 5, dem Umleimer 4 und der Andruckrolle 9 wirkende Anpressdruck sorgt dafür, dass bei der Bewegung des Werkstücks 5 in Vorschubrichtung der Umleimer 4 kontinuierlich aus der Umleimerzufuhreinrichtung 7 gezogen und mit der Kante 6 adhäsiv verbunden wird.

Schließlich ist im vorliegenden Ausführungsbeispiel noch eine manuell betätigbare, um eine Drehachse schwenkbar angelenkte Schneideinrichtung 11 vorgesehen. Eine Schneidfläche der Schneideinrichtung 11 ist dabei so angeordnet, dass sie bei einer manuellen Betätigung eines Betätigungshebels der Schneideinrichtung 11 den Umleimer 4 etwa in einem Abschnitt zwischen der zweiten Vorschubrolle 8b und dem Heißluftgebläse 10 quer zur Transportrichtung durchtrennt. Die manuelle Betätigung der Schneideinrichtung 11 gestattet es somit, den Umleimer 4 hinreichend passgenau zu durchtrennen, damit der Umleimer 4 endseitig die Kante 6 des Werkstücks 5 im Wesentlichen bündig abschließt.

### Sachnummernliste

- 1: - Kantenanleimvorrichtung
- 2: - Träger
- 3: - Oberteil
- 4: - Umleimer
- 5: - Werkstück
- 6: - Kante
- 7: - Umleimerzufuhreinrichtung
- 8a: - erste Vorschubrolle
- 8b: - zweite Vorschubrolle
- 8c: - Führungsrolle
- 9: - Andruckrolle
- 10: - Heißluftgebläse
- 11: - Schneideinrichtung
- 12: - Aufnahme
- 13: - Spindel einer Werkzeugmaschine
- 14: - Anschlag
- 15: - Werkstückauflage

## Patentansprüche

1. Kantenanleimvorrichtung (1) zum Aufbringen eines Umleimers (4) auf eine Kante (6) eines Werkstücks (5), umfassend einen Träger (2), auf dem mindestens eine Umleimerzufuhreinrichtung (7) und eine Anpresseinrichtung, die den Umleimer (4) an die Kante (6) des Werkstücks (5) andrückt, angeordnet sind, wobei der Träger (2) Mittel zur lösbaren Anbringung der Kantenanleimvorrichtung (1) an einer Spindel (13) einer Werkzeugmaschine oder dergleichen aufweist **dadurch gekennzeichnet, dass** die Kantenanleimvorrichtung (1) mindestens eine erste Vorschubrolle (8a) aufweist, die während des Vorschubs des Werkstücks (5) in Vorschubrichtung mit der Kante (6) in Wirkverbindung steht, und eine zweite Vorschubrolle aufweist (8b), die mit der ersten Vorschubrolle (8a) und der Umleimerzufuhreinrichtung (7) in Wirkverbindung steht, wobei der Vorschub des Werkstücks (5) die Zufuhr des Umleimers (4) in der Umleimerzufuhreinrichtung (7) bewirkt.

2. Kantenanleimvorrichtung (1) nach Anspruch 1, **dadurch gekennzeichnet, dass** die Mittel zur lösbaren Anbringung der Kantenanleimvorrichtung (1) eine im Träger (2) angeordnete Aufnahme (12) umfassen, die formschlüssig auf die Spindel (13) aufsetzbar ist.

3. Kantenanleimvorrichtung (1) nach Anspruch 2, **dadurch gekennzeichnet, dass** die Aufnahme (12) im Wesentlichen kreisförmig ausgebildet ist.

4. Kantenanleimvorrichtung (1) nach einem der Ansprüche 2 oder 3, **dadurch gekennzeichnet, dass** die Aufnahme (12) einen Adapter umfasst, der an die Form und den Durchmesser der Spindel (13) angepasst ist.

5. Kantenanleimvorrichtung (1) nach einem der Ansprüche 1 bis 4, **dadurch gekennzeichnet, dass** die Kantenanleimvorrichtung (1) mindestens eine Verriegelungseinrichtung umfasst, um den Träger (2) verschiebe- und/oder verdrehsicher an der Spindel (13) und/oder an einem Anschlag (14) der Werkzeugmaschine anzubringen.

6. Kantenanleimvorrichtung (1) nach einem der Ansprüche 1 bis 5, **dadurch gekennzeichnet, dass** der Träger (2) im Wesentlichen plattenförmig ausgebildet ist.

7. Kantenanleimvorrichtung (1) nach einem der Ansprüche 1 bis 6, **dadurch gekennzeichnet, dass** die Kantenanleimvorrichtung (1) ein Heißluftgebläse (10) umfasst, das geeignet ist, eine auf dem Umleimer (4) angebrachte adhäsive Schicht zu aktivieren.

8. Kantenanleimvorrichtung (1) nach einem der Ansprüche 1 bis 7, **dadurch gekennzeichnet, dass** die Kantenanleimvorrichtung (1) eine Beleimungseinrichtung zum Aufbringen einer adhäsiven Schicht auf die Kante (6) des Werkstücks (5) und/oder den Umleimer (4) umfasst.

9. Kantenanleimvorrichtung (1) nach einem der Ansprüche 1 bis 8, **dadurch gekennzeichnet, dass** die Anpresseinrichtung als Andruckrolle (9) ausgebildet ist.

10. Kantenanleimvorrichtung (1) nach Anspruch 9, **dadurch gekennzeichnet, dass** die Andruckrolle (9) drehbar auf dem Träger (2) gelagert ist.

11. Kantenanleimvorrichtung (1) nach einem der Ansprüche 1 bis 10, **dadurch gekennzeichnet, dass** die Umleimerzufuhreinrichtung (7) mindestens eine Führungsschiene zur Führung des Umleimers (4) aufweist.

12. Kantenanleimvorrichtung (1) nach Anspruch 11, **dadurch gekennzeichnet, dass** die mindestens eine Führungsschiene der Umleimerzufuhreinrichtung (7) an die Breite des Umleimers (4) anpassbar ist.

13. Kantenanleimvorrichtung (1) nach einem der Ansprüche 11 oder 12, **dadurch gekennzeichnet, dass** die mindestens eine Führungsschiene der Umleimerzufuhreinrichtung (7) eine Mehrzahl von Führungsrollen aufweist.

14. Kantenanleimvorrichtung (1) nach einem der Ansprüche 1 bis 13, **dadurch gekennzeichnet, dass** die Kantenanleimvorrichtung (1) eine Schneideinrichtung (11) aufweist.

15. Kantenanleimvorrichtung (1) nach Anspruch 14, **dadurch gekennzeichnet, dass** die Schneideinrichtung (11) manuell betätigbar ist.

16. Kantenanleimvorrichtung (1) nach einem der Ansprüche 1 bis 15, **dadurch gekennzeichnet, dass** die Kantenanleimvorrichtung (1) ein Oberteil (3) aufweist, das lösbar am Träger (2) angebracht ist.

17. Kantenanleimvorrichtung (1) nach Anspruch 16, **dadurch gekennzeichnet, dass** der vertikale Abstand zwischen dem Oberteil (3) und dem Träger (2) einstellbar ist, um die Kantenanleimvorrichtung (1) an unterschiedliche Breiten des Umleimer (4) anzupassen.

18. Kantenanleimvorrichtung (1) nach einem der vorstehenden Ansprüche, **dadurch gekennzeichnet, dass** die Durchmesser der ersten Vorschubrolle (8a) und der zweiten Vorschubrolle (8b) so gewählt sind, dass die Zufuhr des Umleimers (4) synchron mit der Bewegung des Werkstücks (5) in Vorschubrichtung erfolgt.

19. Kantenanleimvorrichtung (1) nach Anspruch 18, **dadurch gekennzeichnet, dass** eine Führungsrolle (8c) drehbar in der Weise auf dem Träger (2) angeordnet ist, dass sie der zweiten Vorschubrolle (8b) gegenüberliegt und dass sich ein Abschnitt der Umleimzufuhreinrichtung (7) zwischen der zweiten Vorschubrolle (8b) und der Führungsrolle (8c) erstreckt.

## Claims

1. An edge glueing device (1) for applying an edge strip (4) to an edge (6) of a workpiece (5) including a carrier (2) on which are arranged at least one edge strip feed device (7) and a pressing device which presses the edge strip (4) against the edge (6) of the workpiece (5), wherein the carrier (2) has means for releasably mounting the edge glueing device (1) to a spindle (13) of a machine tool or the like, **characterised in that** the edge glueing device (1) has at least one first advance roller (8a) which is in operative relationship with the edge (6) during the advance of the workpiece (5) in the advance direction and a second advance roller (8b) which is in operative relationship with the first advance roller (8a) and the edge strip feed device (7), wherein the advance of the workpiece (5) causes the feed of the edge strip (4) in the edge strip feed device (7).

2. An edge glueing device (1) according to claim 1 **characterised in that** the means for releasably mounting the edge glueing device (1) include a receiving means (12) which is arranged in the carrier (2) and which can be fitted on to the spindle (13) in positively locking relationship.

3. An edge glueing device (1) according to claim 2 **characterised in that** the receiving means (13) is substantially circular.

4. An edge glueing device (1) according to one of claims 2 and 3 **characterised in that** the receiving means (12) includes an adaptor adapted to the shape and the diameter of the spindle (13).

5. An edge glueing device (1) according to one of claims 1 to 4 **characterised in that** the edge glueing device (1) includes at least one locking device for mounting the carrier (2) non-displaceably and/or non-rotatably to the spindle (13) and/or an abutment (14) of the machine tool.

6. An edge glueing device (1) according to one of claims 1 to 5 **characterised in that** the carrier (2) is substantially plate-shaped.

7. An edge glueing device (1) according to one of claims 1 to 6 **characterised in that** the edge glueing device (1) includes a hot air blower (10) suitable for activating an adhesive layer applied to the edge strip (4).

8. An edge glueing device (1) according to one of claims 1 to 7 **characterised in that** the edge glueing device (1) includes a glue applicator device for applying an adhesive layer to the edge (6) of the workpiece (5) and/or the edge strip (4).

9. An edge glueing device (1) according to one of claims 1 to 8 **characterised in that** the pressing device is in the form of a pressure applicator roller (9).

10. An edge glueing device (1) according to claim 9 **characterised in that** the pressure applicator roller (9) is mounted rotatably on the carrier (2).

11. An edge glueing device (1) according to one of claims 1 to 10 **characterised in that** the edge strip feed device (7) has at least one guide rail for guiding the edge strip (4).

12. An edge glueing device (1) according to claim 11 **characterised in that** the at least one guide rail of the edge strip feed device (7) can be adapted to the width of the edge strip (4).

13. An edge glueing device (1) according to one of claims 11 and 12 **characterised in that** the at least one guide rail of the edge strip feed device (7) has a plurality of guide rollers.

14. An edge glueing device (1) according to one of claims 1 to 13 **characterised in that** the edge glueing device (1) has a cutting device (11).

15. An edge glueing device (1) according to claim 14 **characterised in that** the cutting device (11) is manually actuable.

16. An edge glueing device (1) according to one of claims 1 to 15 **characterised in that** the edge glueing device (1) has an upper portion (3) mounted releasably to the carrier (2).

17. An edge glueing device (1) according to claim 16 **characterised in that** the vertical spacing between the upper portion (3) and the carrier (2) is adjustable to adapt the edge glueing device (1) to different widths of the edge strip (4).

18. An edge glueing device (1) according to one of the preceding claims **characterised in that** the diameters of the first advance roller (8a) and the second advance roller (8b) are so selected that the feed of the edge strip (4) is effected synchronously with the movement of the workpiece (5) in the advance direction.

19. An edge glueing device (1) according to claim 18 **characterised in that** a guide roller (8c) is arranged on the carrier (2) rotatably in such a way that it is opposite the second advance roller (8b) and that a portion of the edge strip feed device (7) extends between the second advance roller (8b) and the guide roller (8c).

## Revendications

1. Encolleuse de chants (1) permettant l'application d'une bande de chant (4) sur un chant (6) d'une pièce usinée (5), comprenant un support (2) sur lequel sont agencés au moins un dispositif d'amenée de bande de chant (7) et un dispositif presseur qui presse la bande de chant (4) contre le chant (6) de la pièce usinée (5), le support (2) présentant des moyens pour l'application amovible de l'encolleuse de chants (1) au niveau d'une broche (13) d'une machine-outil ou similaire, **caractérisée en ce que** l'encolleuse de chants (1) présente au moins un premier rouleau d'avance (8a) qui est en liaison active avec le chant (6) pendant l'avancement de la pièce usinée (5) dans le sens d'avance et présente un deuxième rouleau d'avance (8b) qui est en liaison active avec le premier rouleau d'avance (8a) et le dispositif d'amenée de bande de chant (7), l'avancement de la pièce usinée (5) entraînant l'amenée de la bande de chant (4) dans le dispositif d'amenée de bande de chant (7).

2. Encolleuse de chants (1) selon la revendication 1, **caractérisée en ce que** les moyens d'application amovible de l'encolleuse de chants (1) comprennent un logement (12) agencé dans le support (2) et pouvant être placé par complémentarité de forme sur la broche (13).

3. Encolleuse de chants (1) selon la revendication 2, **caractérisée en ce que** le logement (12) est réalisé de manière essentiellement circulaire.

4. Encolleuse de chants (1) selon l'une quelconque des revendications 2 ou 3, **caractérisée en ce que** le logement (12) comprend un adaptateur qui est adapté à la forme et au diamètre de la broche (13).

5. Encolleuse de chants (1) selon l'une quelconque des revendications 1 à 4, **caractérisée en ce que** l'encolleuse de chants (1) comprend au moins un dispositif de verrouillage afin de monter le support (2) sans possibilité de déplacement et/ou de rotation au niveau de la broche (13) et/ou au niveau d'une butée (14) de la machine-outil.

6. Encolleuse de chants (1) selon l'une quelconque des revendications 1 à 5, **caractérisée en ce que** le support (2) est réalisé essentiellement en forme de plaque.

7. Encolleuse de chants (1) selon l'une quelconque des revendications 1 à 6, **caractérisée en ce que** l'encolleuse de chants (1) comprend une soufflante d'air chaud (10) qui est adaptée pour activer une couche adhésive appliquée sur la bande de chant (4).

8. Encolleuse de chants (1) selon l'une quelconque des revendications 1 à 7, **caractérisée en ce que** l'encolleuse de chants (1) comprend un dispositif d'encollage pour l'application d'une couche adhésive sur le chant (6) de la pièce usinée (5) et/ou la bande de chant (4).

9. Encolleuse de chants (1) selon l'une quelconque des revendications 1 à 8, **caractérisée en ce que** le dispositif presseur est réalisé sous forme de rouleau presseur (9).

10. Encolleuse de chants (1) selon la revendication 9, **caractérisée en ce que** le rouleau presseur (9) est logé de manière rotative sur le support (2).

11. Encolleuse de chants (1) selon l'une quelconque des revendications 1 à 10, **caractérisée en ce que** le dispositif d'amenée de bande de chant (7) présente au moins un rail de guidage pour guider la bande de chant (4).

12. Encolleuse de chants (1) selon la revendication 11, **caractérisée en ce que** l'au moins un rail de guidage du dispositif d'amenée de bande de chant (7) peut être adapté à la largeur de la bande de chant (4).

13. Encolleuse de chants (1) selon l'une quelconque des revendications 11 ou 12, **caractérisée en ce que** l'au moins un rail de guidage du dispositif d'amenée de bande de chant (7) présente une pluralité de rouleaux de guidage.

14. Encolleuse de chants (1) selon l'une quelconque des revendications 1 à 13, **caractérisée en ce que** l'encolleuse de chants (1) présente un dispositif de coupe (11).

15. Encolleuse de chants (1) selon la revendication 14, **caractérisée en ce que** le dispositif de coupe (11) peut être actionné manuellement.

16. Encolleuse de chants (1) selon l'une quelconque des revendications 1 à 15, **caractérisée en ce que** l'encolleuse de chants (1) présente une partie supérieure (3) qui est montée de manière amovible au niveau du support (2).

17. Encolleuse de chants (1) selon la revendication 16, **caractérisée en ce que** la distance verticale entre la partie supérieure (3) et le support (2) est réglable afin d'adapter l'encolleuse de chants (1) à différentes largeurs de la bande de chant (4).

18. Encolleuse de chants (1) selon l'une quelconque des revendications précédentes, **caractérisée en ce que** les diamètres du premier rouleau d'avance (8a) et du deuxième rouleau d'avance (8b) sont sélectionnés de telle sorte que l'amenée de la bande de chant (4) est synchronisée avec le mouvement de la pièce usinée (5) dans le sens d'avance.

19. Encolleuse de chants (1) selon la revendication 18, **caractérisée en ce qu'**un rouleau de guidage (8c) est agencé de façon rotative sur le support (2) de manière à faire face au deuxième rouleau d'avance (8b) et **en ce qu'**une section du dispositif d'amenée de bande de chant (7) s'étend entre le deuxième rouleau d'avance (8b) et le rouleau de guidage (8c).
